# EUROPÄISCHE PATENTSCHRIFT

(11) **EP 0 852 465 B1**
(45) Veröffentlichungstag und Bekanntmachung des Hinweises auf die Patenterteilung: **13.10.1999**
(21) Anmeldenummer: 96932484.7
(22) Anmeldetag: 09.09.1996
(51) Int. Cl.: A23K 3/00

(54) **WÄSSRIGE LÖSUNGEN AUS AMEISENSÄURE, PROPIONSÄURE UND AMMONIAK UND DEREN VERWENDUNG**
AQUEOUS SOLUTIONS OF FORMIC ACID, PROPIONIC ACID AND AMMONIA AND THEIR USE
SOLUTIONS AQUEUSES COMPOSEES D'ACIDE FORMIQUE, D'ACIDE PROPIONIQUE ET D'AMMONIAQUE ET LEUR UTILISATION

(30) Priorität: 18.09.1995 DE 19534490
(43) Veröffentlichungstag der Anmeldung: 15.07.1998
(73) Patentinhaber: BASF AKTIENGESELLSCHAFT, 67056 Ludwigshafen (DE)
(72) Erfinder: KÄSLER, Bruno, D-67071 Ludwigshafen (DE); MÜSCHEN, Hans, D-67133 Maxdorf (DE); GAUS, Günter, D-68647 Biblis (DE)
(86) Internationale Anmeldenummer: EP9603947
(87) Internationale Veröffentlichungsnummer: WO9710724

(56) Entgegenhaltungen:
- EP-A- 0 411 827
- DE-A- 2 653 448
- DE-A- 2 653 449
- DE-A- 3 220 233
- US-A- 3 988 483
- IRISH JOURNAL OF AGRICULTURAL AND FOOD RESEARCH, Bd. 33, Nr. 1, 1994, Seiten 11-24, XP000614111 A.P. MOLONEY ET AL.: "Rumen fermentation and degradability in steers offered grass silage made without an additive, with formic acid or with a partially neutralised blend of aliphatic organic acids"

## Beschreibung

Die vorliegende Erfindung betrifft wäßrige Lösungen aus Ameisensäure, Propionsäure und Ammoniak und deren Verwendung in der Tierernährung.

Aus DE 26 53 448 sind wäßrige Lösungen aus Ammoniak und Ameisensäure mit einem molaren Verhältnis von Formiat- zu Ammoniumionen von 4:1 bekannt sowie deren Anwendung zur Konservierung von Substraten gegen mikrobielle Zersetzung. Auch der Zusatz weiterer Monocarbonsäuren, bevorzugt aus der Gruppe von Essig-, Propion-, Isobutter-, n-Butter-, n-Valerian-, 2-Methylbutter-, Lävulin-, Sorbin-, Acryl- und Methacrylsäure wird dort beschrieben.

Die in DE 26 53 448 beschriebenen Lösungen weisen jedoch einen stark sauren pH-Wert auf (pH<3), weshalb sie für einige Anwendungen in der Tierernährung nicht optimal geeignet sind. Die Erhöhung des PH-Wertes, beispielsweise durch Zugabe einer größeren Menge an Ammoniak führt jedoch zu dem unerwünschten Ergebnis, daß die Gefrierpunkte der wäßrigen Lösungen deutlich über 0°C liegen, was die Handhabung solcher Lösungen in der landwirtschaftlichen Praxis erschwert.

Es bestand daher die Aufgabe, wäßrige Lösungen, die Ameisensäure und Ammoniak enthalten, bereitzustellen, die einerseits keinen zu stark sauren pH-Wert aufweisen, andererseits einen für praktische Zwecke hinreichend tiefen Gefrierpunkt besitzen.

Es wurde gefunden, daß sich die gewünschten Eigenschaften erzielen lassen mit einer wäßrigen Lösung, bestehend aus
a) 35-42 Gew.-% Propionsäure,
b) 30-40 Gew.-% Ameisensäure,
c) 5-10 Gew.-% Ammoniak und
d) 10-30 Gew.-% Wasser.

Eine besonders bevorzugte Ausführungsform ist eine wäßrige Lösung, die aus
a) 38 Gew.-% Propionsäure,
b) 35 Gew.-% Ameisensäure,
c) 6-8 Gew.-% Ammoniak und
d) 20 Gew.-% Wasser besteht.

Die erfindungsgemäßen Lösungen lassen sich herstellen, indem man wäßrige Lösungen der Säuren mit gasförmigem Ammoniak oder wäßriger Ammoniaklösung so versetzt, daß die angegebenen Gewichtsverhältnisse erreicht werden. Es kann auch, ausgehend von wäßrigen Lösungen der Ammoniumsalze einer oder beider Säuren, solange weitere freie Säure hinzugefügt werden, bis das gewünschte Gewichtsverhältnis erreicht ist.

Die erfindungsgemäßen Lösungen finden in der Tierernährung, vor allem als Zusatz für Futter für Schweine, Ferkel und Geflügel, wie Hühner und Puten, Anwendung. Sie eignen sich besonders zur Konservierung von Tierfutter, bevorzugt von Flüssigfutter, gegen unerwünschte mikrobielle Zersetzung. Die erfindungsgemäßen Lösungen besitzen neben der pH-Wert senkenden und antibakteriellen Wirkung auch einen nutritiven Effekt, der vor allem auf die Ameisensäure zurückzuführen ist, und der insbesondere bei der Schweinefütterung zur Geltung kommt.

Die erfindungsgemäßen Lösungen können auch zur Konservierung und/oder zur Desinfektion des in der Tierernährung verwendeten Trinkwassers eingesetzt werden.

Eine weitere Anwendung der erfindungsgemäßen Lösungen ist bei der Herstellung von Silofutter (Silierung). In Silofutter findet häufig neben der gewünschten Milchsäuregärung eine unerwünschte mikrobielle Zersetzung, vor allem durch Schimmelpilze und Fäulnisbakterien statt. Um diese unerwünschte Fäulnis zu verhindern können dem Tierfutter die erfindungsgemäßen Lösungen zugesetzt werden.

In der Regel ist ein Zusatz von 0,1 - 10 kg wäßriger Lösung pro Tonne Tierfutter ausreichend für eine erfolgreiche Konservierung. Bevorzugt werden die wäßrigen Lösungen in Mengen von 0,5 - 4,5 kg pro Tonne Tierfutter zugesetzt.

Der Zusatz erfolgt üblicherweise unmittelbar vor der Silierung.

Die erfindungsgemäßen Lösungen besitzen die folgenden Eigenschaften:
- Sie weisen einen pH-Wert im Bereich von 3,5 bis 4,5 auf.
- Ihre Gefrierpunkte liegen unterhalb von 0°C, die besonders bevorzugten Lösungen haben Gefrierpunkte von tiefer als -20°C.
- Ihre Dichte beträgt 1,1-1,2 g/ml.
- Die Viskosität beträgt bei 20°C 8,82 mPa·s

### Beispiele

Die in den folgenden Beispielen genannten Silogüter wurden mit einer erfindungsgemäßen wäßrigen Lösung (im folgenden als Lösung A bezeichnet) folgender Zusammensetzung:
38 Gew.-% Propionsäure
35 Gew.-% Ameisensäure
7 Gew.-% Ammoniak
20 Gew.-% Wasser
konserviert. Die so konservierten Silogüter wurden jeweils mit den entsprechenden Silogütern, die zur Kontrolle mit Ameisensäure und ohne Konservierungsmittel konserviert wurden, verglichen.

In den Vergleichsversuchen wurden die Gärparameter der Silogüter verglichen.

Das verwendete Silogut wurde als Feinschnitt mit einem motorgetriebenen Silohäcksler geerntet und im Direktschnitt in je einen 4 m³ großen Versuchssilo eingelagert.

Es wurden insgesamt 9 verschiedene Siloeinlagerungen ausgehend von drei verschiedenen Silogütern (Raygras, Knäuelgras und Luzerne) erstellt.

Nach mehr als 5 Monaten Konservierung wurden die Silogüter in einer Reihe nacheinander an Gruppen zu je 6 Schafen verfüttert, die in einem Stoffwechselkäfig gehalten wurden. Ausgehend von täglich aus dem Silo entnommenem viehfutter wurde eine Repräsentativprobe für die 6 Tage des Experimentzeitraumes hergestellt. Die Haltbarkeitsqualität wurde nach einem in einer INRA-Veröffentlichung 1981 "Prévision de la valeur Nutritive des Aliments des Ruminants" beschriebenen Verfahren bestimmt.

### Beispiel 1

Konservierung der Raygras-Hybride "Texy" erster Zyklus bei beginnendem Ährenbildungsstadium (Erntedatum: 24. Mai 1995)

| Ansatz | Konservierungsansätze | Aufwandmenge des Konservierungsstoffes in l/t Frischmasse |
|---|---|---|
| A | Kontrolle ohne Konservierungsmittel | - |
| B | Kontrolle mit Ameisensäure | 3,53 |
| C | Lösung A | 4,54 |

### Beispiel 2

Konservierung von Knäuelgras "Amply" erster Zyklus bei beginnendem Ährenbildungsstadium (Erntedatum: 1. Juni 1995).

| Ansatz | Konservierungsansätze | Aufwandmenge des Konservierungsstoffes in l/t Frischmasse |
|---|---|---|
| D | Kontrolle ohne Konservierungsmittel | - |
| E | Kontrolle mit Ameisensäure | 3,40 |
| F | Lösung A | 4,50 |

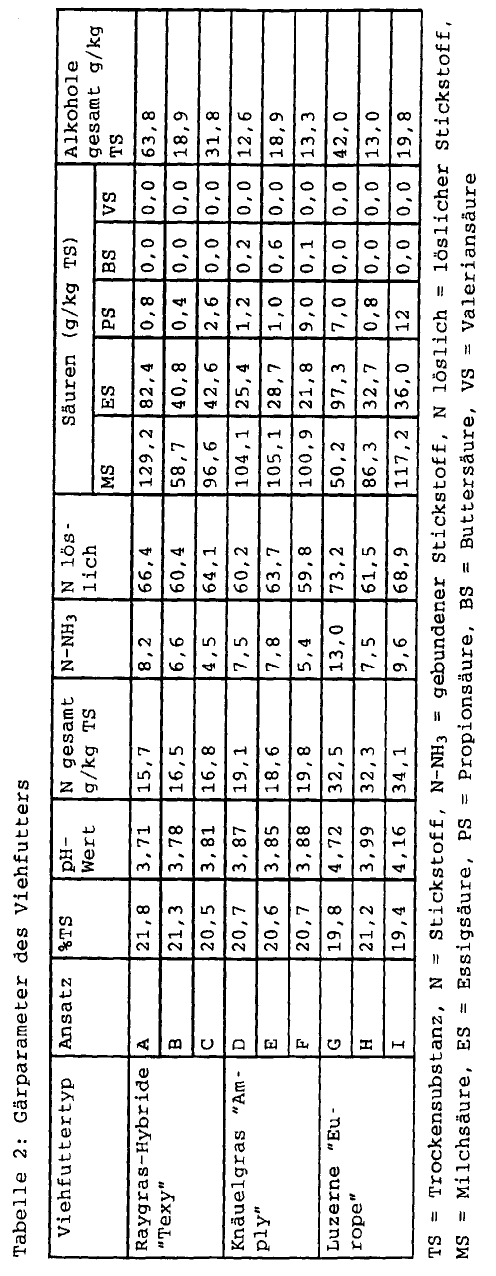

### Beispiel 3

Konservierung von Luzerne "Europe" erster Zyklus, Knospenstadium (Erntedatum: 8. Juni 1995).

| Ansatz | Konservierungsansätze | Aufwandmenge des Konservierungsstoffes in l/t Frischmasse |
|---|---|---|
| G | Kontrolle ohne Konservierungsmittel | - |
| H | Kontrolle mit Ameisensäure | 4,71 |
| I | Lösung A | 5,06 |

Die Ergebnisse der in den Beispielen 1 bis 3 durchgeführten Ansätze A bis I werden in den Tabellen 1 bis 3 wiedergegeben.

**Tabelle 1**

| Chemische Zusammensetzung des geernteten und konservierten Grünviehfutters | | | | |
|---|---|---|---|---|
| Viehfuttertyp | Ansatz | %TS | | Gehalt lösl. Kohlenhydrate in %TS |
| | | Ernte | Asche | |
| Raygras-Hybride "Texy" | A | 20,1 | 8,5 | 22,9 |
| | B | 21,3 | 8,5 | 22,6 |
| | C | 19,7 | 8,5 | 22,6 |
| Knäuelgras "Amply" | D | 19,4 | 9,4 | 8,9 |
| | E | 19,7 | 9,2 | 8,3 |
| | F | 19,4 | 9,4 | 8,9 |
| Luzerne "Europe" | G | 16,0 | 10,8 | 5,6 |
| | H | 17,2 | 10,8 | 4,9 |
| | I | 16,0 | 10,8 | 5,6 |

Tabelle 1 gibt die chemische Zusammensetzung des geernteten Viehfutters für die Konservierung im Silo wieder.

Der Gehalt der Raygras-Hybride und des Knäuelgrases an löslichen Kohlenhydraten war außergewöhnlich hoch. Auch der Gehalt in der Trockensubstanz (= TS) war erhöht. Beides zeigt, daß die chemische Zusammensetzung des Raygrases und des Knäuelgrases für die Siloeinlagerung sehr günstig waren. Die chemische Zusammensetzung bei der Luzerne war normal.

**Tabelle 3**

| Gärparameter des Viehfutters - Alkohole - | | | | | | |
|---|---|---|---|---|---|---|
| Viehfuttertyp | Ansatz | Alkohole gesamt | MeOH | EtOH | PrOH | BuOH |
| | | g/kg TS | | | | |
| Raygras-Hybride "Texy" | A | 63,8 | 0,52 | 35,94 | 27,34 | 0,0 |
| | B | 18,9 | 0,50 | 14,97 | 3,47 | 0,0 |
| | C | 31,8 | 0,30 | 22,50 | 9,03 | 0,0 |
| Knäuelgras "Amply" | D | 12,6 | 0,36 | 10,03 | 2,20 | 0,0 |
| | E | 18,9 | 0,62 | 14,08 | 4,15 | 0,0 |
| | F | 13,3 | 0,29 | 12,18 | 0,86 | 0,0 |
| Luzerne "Europe" | G | 42,0 | 8,52 | 13,06 | 19,57 | 0,89 |
| | H | 13,0 | 4,25 | 6,64 | 2,11 | 0,0 |
| | I | 19,8 | 6,61 | 8,06 | 5,15 | 0,0 |

Aus Tabelle 2 und 3 ist klar ersichtlich, daß ohne eine Konservierung (Ansatz A, D und G) bis auf das Knäuelgras (Ansatz D) die Gärparameter des Silogutes ungünstig sind. Die Gärparameter weisen ohne Konservierung einen hohen Essigsäure- und Alkoholgehalt auf. Dies weist auf eine unvorteilhafte heterofermentative Gärung hin. Das Raygras- und Luzerne-Silogut ohne Konservierungsmittel hatte eine schlechte Haltbarkeitsqualität.

Aus den Versuchen wird ersichtlich, daß die Gärparameter bei Einsatz des erfindungsgemäßen Mittels genauso gut sind wie mit dem bekannten, Ameisensäure enthaltenden Mittel.

Darüber hinaus ist das erfindungsgemäße Mittel jedoch im Gegensatz zur Ameisensäure nicht ätzend und reizt die Haut im Kaninchentest nicht. Dies ist ein wesentlicher anwendungstechnischer Vorteil. Auch die Metallkorrosivität ist mit dem erfindungsgemäßen Mittel deutlich geringer als mit den bekannten Mitteln, die Ameisensäure als Konservierungsstoff enthalten.

## Patentansprüche

1. Wäßrige Lösung bestehend aus
a) 35-42 Gew.-% Propionsäure,
b) 30-40 Gew.-% Ameisensäure,
c) 5-10 Gew.-% Ammoniak und
d) 10-30 Gew.-% Wasser.

2. Verwendung einer wäßrigen Lösung nach Anspruch 1 in der Tierernährung

3. Verwendung gemäß Anspruch 2, dadurch gekennzeichnet, daß man wäßrige Lösungen nach Anspruch 1 zur Konservierung von Tierfutter einsetzt.

4. Verwendung gemäß Anspruch 2, dadurch gekennzeichnet, daß man wäßrige Lösungen nach Anspruch 1 zur Konservierung oder Desinfektion von Trinkwasser einsetzt.

5. Mittel zur Konservierung von Tierfutter, dadurch gekennzeichnet daß es im wesentlichen aus
a) 35-42 Gew.-% Propionsäure
b) 30-40 Gew.-% Ameisensäure,
c) 5-10 Gew.-% Ammoniak und
d) 10-30 Gew.-% Wasser besteht.

## Claims

1. An aqueus solution consisting of
a) 35-42% by weight of propionic acid,
b) 30-40% by weight of formic acid,
c) 5-10% by weight of ammonia and
d) 10-30% by weight of water.

2. Use of an aqueous solution as claimed in claim 1 in animal nutrition

3. Use as claimed in claim 2, wherein aqueous solutions as claimed in claim 1 are used for conserving animal feed.

4. Use as claimed in claim 2, wherein aqueous solutions as claimed in claim 1 are used for conserving or disinfecting drinking water.

5. A composition for conserving animal feed, which essentially consists of
a) 35-42% by weight of propionic acid
b) 30-40% by weight of formic acid,
c) 5-10% by weight of ammonia and
d) 10-30% by weight of water.

## Revendications

1. Solution aqueuse de
a) 35-42% en poids d'acide propionique,
b) 30-40% en poids d'acide formique,
c) 5-10% en poids d'ammoniac et
d) 10-30% en poids d'eau.

2. Utilisation d'une solution aqueuse selon la revendication 1 dans la nourriture des animaux.

3. Utilisation selon la revendication 2, caractérisée par le fait qu'on emploie des solutions aqueuses selon la revendication 1 pour la conservation des aliments pour animaux.

4. Utilisation selon la revendication 2, caractérisée par le fait qu'on emploie des solutions aqueuses selon la revendication 1 pour la conservation ou la désinfection de l'eau potable.

5. Agent pour la conservation d'aliments pour animaux, caractérisé par le fait qu'il consiste pour l'essentiel en
a) 35-42% en poids d'acide propionique,
b) 30-40% en poids d'acide formique,
c) 5-10% en poids d'ammoniac et
d) 10-30% en poids d'eau.
